# EUROPÄISCHE PATENTSCHRIFT

(11) **EP 3 842 208 B1**
(45) Veröffentlichungstag und Bekanntmachung des Hinweises auf die Patenterteilung: **20.09.2023**
(21) Anmeldenummer: 19219372.0
(22) Anmeldetag: 23.12.2019
(51) Int. Cl.: B29C 45/14, B29C 45/26, B29C 65/32, B29C 33/06, B29C 45/72, B29C 45/73, B29K 705/00

(54) **VERWENDUNG EINER VORRICHTUNG ZUR INDUKTIVEN ERWÄRMUNG EINES ELEKTRISCH-LEITENDEN, VORZUGSWEISE METALLISCHEN, EINLEGETEILS ALS BESTANDTEIL EINES SPRITZGIESSLINGS**
USE OF A DEVICE FOR INDUCTIVE HEATING OF AN ELECTRICALLY CONDUCTIVE, PREFERABLY METALLIC, INSERTION PART AS COMPONENT OF AN INJECTION MOULDING
UTILISATION D'UN DISPOSITIF DE CHAUFFAGE INDUCTIF D'UN ÉLÉMENT D'INSERTION, DE PRÉFÉRENCE MÉTALLIQUE, ÉLECTRO-CONDUCTEUR, EN TANT QUE COMPOSANT D'UN OBJET MOULÉ PAR INJECTION

(43) Veröffentlichungstag der Anmeldung: 30.06.2021
(73) Patentinhaber: COBES GmbH, 77955 Ettenheim (DE)
(72) Erfinder: STADELMEIER, Matthias, 79336 Herbolzheim (DE); BARTSCH, Cay-Oliver, 79336 Herbolzheim (DE)
(74) Vertreter: Dantz, Jan Henning

(56) Entgegenhaltungen:
- CN-A- 108 454 001
- DE-A1-102016 208 036
- DE-B4- 10 163 799
- JP-A- 2004 249 681
- US-A- 4 661 055
- US-A1- 2019 047 191
- US-B2- 8 235 697
- LIEBEL G: "ERFAHRUNGEN MIT DER PLASMAVORBEHANDLUNG", METALLOBERFLACHE, CARL HANSER VERLAG. MUNCHEN, DE, Bd. 45, Nr. 10, 1. Oktober 1991 (1991-10-01), Seiten 443-449, XP000237394,

## Beschreibung

Die vorliegende Erfindung betrifft eine Verwendung einer Vorrichtung zur Induktiven Erwärmung eines elektrisch-leitenden, vorzugsweise metallischen, Einlegeteils als Bestandteil eines Spritzgießlings.

Es geht in der vorliegenden Erfindung um die Schaffung eines Spritzgießlings insbesondere aus Kunststoff mit zumindest einem umspritzten, vorzugsweise metallischen, Einlegeteil. Die Anbindung sollte mediumsdicht sein, was bei herkömmlichen Spritzgussverfahren nicht erreicht wird. Dies liegt u.a. daran, dass das Einlegeteil meist kalt vorliegt und auf den heißen Kunststoff trifft. Ein Eintauchen dieses Spritzgießlings in ein Wasserbad und das Einleiten von Luftblasen in den Verbindungsbereich zeigt, dass die Luftblasen zwischen dem Einlegeteil und dem Kunststoff durchgeleitet werden. Dieser Spritzgießling ist somit nicht mediumsdicht.

Es geht nunmehr darum eine konstruktive Lösung zu finden, um eine mediumsdichte Verbindung zwischen Einlegeteil und spritzgegossenen Kunststoff zu schaffen. Hierfür sollte das Einlegeteil in etwa dieselbe Temperatur aufweisen wie der Kunststoff beim Einleiten in die Spritzgussform. Dadurch kann eine gleichmäßigere und einheitliche Abkühlung beider Elemente, des Kunststoffs und des Metalls erfolgen.

Aus einem Vortrag zum Thema "Induktive Beheizung von Spritzgießwerkzeugen - eine Übersicht" von E-Burkard, W.Schinköthe, auf der SKZ Fachtagung 8.-9. März 2006 in Würzburg ist eine Vorrichtung mit welcher ein linear-verschieblicher Arm in eine geöffnete Spritzgussform fährt und das Einlegeteil induktiv erwärmt. Im Anschluss wird der Arm zurückgefahren, die Spritzgussform wird geschlossen und der Spritzgussvorgang wird gestartet. Dies hat den Nachteil, dass die Zykluszeiten der Spritzgussanlage durch das lange geöffnete Werkzeug deutlich verlängert werden.

Im gleichen Vortrag werden zudem Vorrichtungen zum indirekten Erwärmen eines Spritzgießlings oder eines Einlegeteils vorgestellt. Dabei wird zumeist die Spritzgussform induktiv erwärmt und dadurch selbstverständlich auch das Material innerhalb der Spritzgussform. Da es allerdings lediglich um das gezielte Erwärmen des Einlegeteils geht, ohne zusätzliches Erwärmen des gesamten Spritzgussbauteils, ist dieser energetische Verbrauch bei dieser Form der indirekten Erwärmung nicht gerechtfertigt.

Die JP 2004 249681 A1 offenbart eine Spritzguss-Vorrichtung zur Herstellung eines Kunststoff-Steckelements mit metallischen Steckelementen. In einem ersten Hohlraum erfolgt die Formgebung des Spritzlings, während in einem zweiten Hohlraum eine Erwärmung der Steckelemente erfolgt. Hierfür wird ein stabförmiger Induktor in den Hohlraum benachbart zur Spritzguss-Kavität eingeführt und derart positioniert, dass ein Erwärmen der Steckelemente möglich ist. Dabei ist der stabförmige Induktor in den rückseitig offenen Hohlraum einführbar und liegt im positionierten Zustand im Wesentlichen an den Wänden des Hohlraumes an. Ausgehend von der vorgenannten Vorbetrachtung ist es die Aufgabe der vorliegenden Erfindung ein Spritzgussverfahren bereitzustellen, welches geringe Zykluszeiten und einen vergleichsweise geringen Energieverbrauch zur Schaffung einer mediumsdichten Verbindung zwischen Einlegeteil und Spritzgussmasse aufweist.

Die vorliegende Erfindung löst diese Aufgabe durch den Gegenstand des Anspruchs 1.

Die Erfindung umfasst dabei eine erfindungsgemäße Verwendung einer Vorrichtung zur induktiven Erwärmung eines elektrisch-leitenden, vorzugsweise metallischen, Einlegeteils als Bestandteil eines Spritzgießlings während dessen Herstellung im Spritzgussverfahren in einem Spritzgusswerkzeug einer Spritzgussanlage.

Das Spritzgusswerkzeug weist einen ersten Hohlraum auf, welcher benachbart ist zu einem formgebenden zweiten Hohlraum. In den formgebenden zweiten Hohlraum wird typischerweise der flüssige Kunststoff zur Ausformung des Spritzlings eingefüllt.

In dem ersten Hohlraum ist ein Induktor der Vorrichtung zur induktiven Erwärmung positioniert. Bei dem Induktor kann es sich z.B. um eine Spule handeln. Ein weiterer Bestandteil der Vorrichtung zur induktiven Erwärmung kann beispielsweise eine Steuereinheit sein.

Zwischen den beiden vorgenannten Hohlräumen ist eine Trennwand ausgebildet. Die Trennwand kann eine oder mehrere Öffnungen zur bereichsweisen Positionierung zumindest eines Einlegeteils im ersten und im zweiten Hohlraum aufweisen, derart dass sich das Einlegeteil in das elektromagnetische Feld des Induktors erstreckt.

Das Einlegeteil befindet sich dabei somit im ersten Hohlraum, in der Öffnung und im zweiten Hohlraum.

Dadurch wird eine direkte Erwärmung des Einlegeteils erreicht. Diese Erwärmung kann wesentlich besser gesteuert werden als eine indirekte Erwärmung über das Werkzeugbauteil. Zudem kann eine bessere Ableitung der Wärme aus dem formgebenden Hohlraum erfolgen, z.B. indem eine Kühlung in die Spritzgussanlage integriert ist. Zur Kühlung können die Bauteile des Spritzgusswerkzeugs, insbesondere nahe des formengebenden Hohlraums, mit Kanälen durchzogen werden durch welche ein Kühlmittel, z.B. Wasser, geleitet werden kann.

Vorteilhafte Ausgestaltungen der Ansprüche sind Gegenstand der Unteransprüche.

Die induktive Erwärmung kann insbesondere derart erfolgen, dass die Temperatur des Einlegeteils größer ist als die Temperatur eines formgebenden Bauteils der Spritzguss-Anlage zu welcher die Trennwand zugeordnet ist. Die Geschwindigkeit der Erwärmung und deren Dauer kann durch eine Steuer- und/oder Auswerteeinheit gesteuert werden.

Das Erwärmen des Einlegeteils kann bei geschlossenem Spritzgusswerkzeug, vorzugsweise während des Ausformens des Spritzgießlings im formgebenden zweiten Hohlraum, erfolgen. Dadurch wird die Prozessführung besonders zeiteffizient. Eine Erwärmung in diesem Kontext ist so zu verstehen, dass auch lediglich eine teilweise Erwärmung erfolgt, so dass die Erwärmung zunächst beim geöffneten Werkzeug beginnen kann, die Zieltemperatur allerdings erst im geschlossenen Werkzeug erreicht wird.

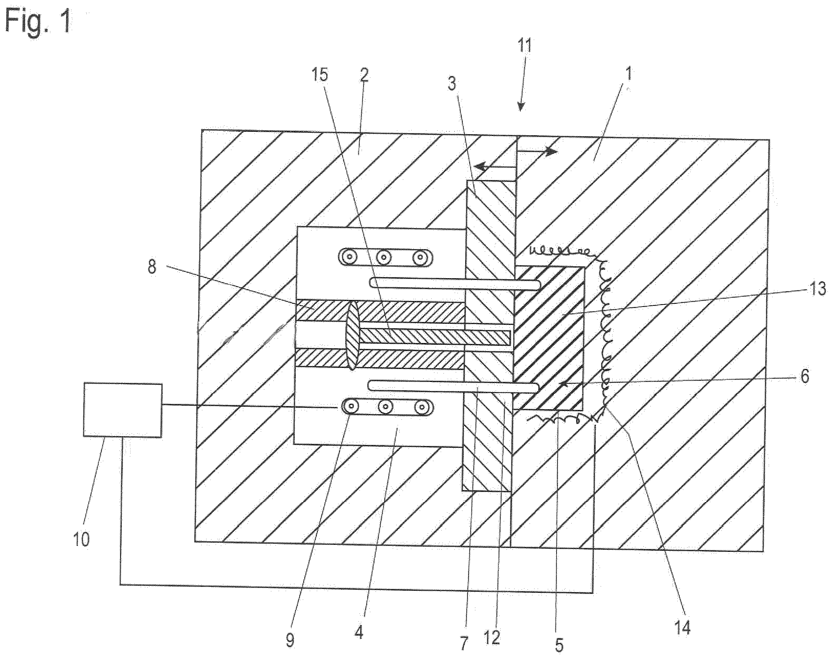

Das Werkzeug kann zumindest zwei formgebende Bauteile umfassen, welche den formgebenden zweiten Hohlraum bilden. Dies können typischerweise zwei Werkzeughälften, eine Auswerferseite und eine Düsenseite, sein. Es können aber auch mehr als zwei Bauteile vorgesehen sein. Zumindest ein erstes der Bauteile kann gegenüber dem zweiten Bauteil linear in einer Öffnungsrichtung R (siehe Pfeile in Fig. 1) verschiebbar angeordnet sein. Weiterhin kann dieses erste Bauteil eine Einspritzdüse zum Einspritzen von flüssigem Kunststoff in den formgebenden Hohlraum aufweisen und das zweite Bauteil eine Ausstoßvorrichtung, insbesondere eine Auswerfereinrichtung, aufweisen. Diese Auswerfereinrichtung ermöglicht ein Herauslösen und einen Ausstoß des Spritzgießlings bei geöffnetem Spritzgusswerkzeug.

Die Trennwand kann ein Teil des vorgenannten zweiten Bauteils sein. Sie kann lösbar vom übrigen Bauteil angeordnet sein, so dass der erste Hohlraum durch Lösen der Trennwand zugänglich ist. Dies ist beispielsweise bei einer Wartung oder Reparatur des Induktors von Vorteil.

Der Induktor kann als zylindrische Spule ausgebildet sein, wobei das Einlegeteil in das Innenfeld oder das Außenfeld der Spule ragt. Dies hat u.a. konstruktive Vorteile. Als zylindrische Spule in diesem Kontext sind z.B. und besonders bevorzugt auch rechteckig-zylindrische Spulen zu verstehen. Der Querschnitt der Spule muss daher nicht zwingend kreisförmig sein.

In dem ersten Hohlraum ist erfindungsgemäß zumindest ein als Vorsprung ausgebildetes Stützelement angeordnet, welcher sich parallel zur Öffnungsrichtung über die gesamte Länge des ersten Hohlraumes bis zur Trennwand erstreckt und über welchen eine Gegenkraft zum Einspritzdruck beim Spritzgießen auf die Trennwand übertragbar ist, derart, dass Kraftübertragung an der Vorrichtung zur Induktiven Erwärmung vorbeigeleitet wird.

Es sollte vom übrigen Bauteil eine Kraftübertragung auf die Trennwand erfolgen, welche u.a. den zweiten Hohlraum begrenzt. Diese Kraft sollte allerdings vorzugsweise nicht durch den Induktor übertragen werden. Entsprechend sind im Hohlraum der oder die vorgenannten kraftleitenden Vorsprünge vorgesehen, welche eine rückwärtig-eingeleitete Kraft am Induktor vorbei an die Trennwand weitergeben um eine erforderliche Schließkraft aufzubringen.

Der Vorsprung bzw. das Stützelement kann in einer bevorzugten Ausgestaltung als ein Keramikblock ausgebildet sein oder es können zumindest zwei Vorsprünge bzw. Stützelemente vorgesehen sein, die jeweils als Keramikstab mit Ausrichtung in Öffnungsrichtung R ausgebildet sind. Der Keramikblock oder Keramikstab kann zudem vorteilhaft zur Führung der linear verschieblichen Auswerfereinrichtung und/oder als Spulenkörper zum Tragen der Induktorspule ausgebildet sein.

Alternativ oder zusätzlich kann die Vorrichtung zur induktiven Erwärmung allerdings ein Bauteil zur Kraftübertragung einer Gegenkraft zum Einspritzdruck beim Spritzgießen oder Schließkraft aufweisen, wobei das Bauteil vorzugsweise als Spulenkörper ausgebildet ist. Der Spulenkörper ist vorzugsweise Teil der als Induktor eingesetzten Spule. In diesem Fall empfiehlt sich ein Spulenkörper aus Keramik. Diese Variante ist allerdings weniger bevorzugt.

Die Temperatur des erwärmten Einlegeteils kann vorzugsweise um weniger als 20 K gegenüber der Temperatur der im Ausformen eingespritzten Masse liegen.

Die Temperaturdifferenz zwischen dem Einlegeteil und dem formgebenden Bauteil zur Ausformung des Spritzgießlings kann vorteilhaft zumindest 80 K, vorzugsweise zwischen 100-300 K liegen. Zur Ermittlung der Temperaturen können im Spritzgusswerkzeuge entsprechende druckstabile Temperatursensoren angeordnet sein.

Das Einlegeteil kann vor seiner Erwärmung durch eine vorbereitende Plasmabehandlung fettfrei und oxidschichtfrei ist.

Weiterhin kann das Einlegeteil vor der induktiven Erwärmung mit einer Polymerbeschichtung, vorzugsweise aufgebracht mittels einer Plasmabehandlung, zur mediumsdichten Anbindung des Einlegeteils an die Kunststoffmasse eines Spritzgießlings versehen werden.

Plasmabehandlungen von Metalloberflächen als auch Plasmabeschichtungen sind an sich bekannt haben allerdings zusätzliche synergetische Effekte bei der Anbindung des Einlegeteils mit der Spritzgussmasse im Rahmen der vorliegenden erfindungsgemäßen Verwendung der Vorrichtung zum induktiven Erwärmen.

Die Trennwand und zumindest der Induktor, und vorzugsweise auch die Vorsprünge und/oder die Ausstoßvorrichtung können zur besseren Wartung als eine gegenüber dem restlichen Bauteil lösbare Einheit ausgebildet sein. So kann die Baueinheit durch Lösen z.B. von Schrauben entnommen werden und die Bestandteile der Baueinheit sodann repariert oder gewartet werden. Weiterhin kann es notwendig sein, dass eine andere Serie von Spritzlingen eine andere Ausgestaltung der Trennwand und der Öffnungen und eine andere Positionierung des Induktors benötigen. Beispielsweise benötigt ein dreipoliger Stecker drei Öffnungen, während ein zweipoliger Stecker zwei Öffnungen benötigt. Entsprechend kann ein schneller Wechsel der Trennwand und des Induktors durch deren Ausgestaltung als Baueinheit einen erheblichen Zeitvorteil beim Wechsel auf eine andere Serie von Spritzlingen mit sich bringen.

Weiterhin bevorzugt kann ein thermisch-isolierendes Material zwischen Induktor und Trennwand, z.B. Keramik, angeordnet sein, so dass sich eine Erwärmung der Trennwand durch den in den zweiten Hohlraum eingeführten Kunststoff nicht auf die Leistung des Induktors auswirkt.

Weitere Vorteile, Merkmale und Einzelheiten der Erfindung ergeben sich aus der nachfolgenden Beschreibung, in der mehrere Ausführungsbeispiele der Erfindung anhand der beiliegenden Zeichnungen näher erläutert werden. Der Fachmann wird die in den Zeichnungen, der Beschreibung und den Ansprüchen in Kombination offenbarten Merkmale zweckmäßigerweise auch einzeln betrachten und zu sinnvollen weiteren Kombinationen zusammenfassen. Es zeigen:
- Fig. 1: schematische Schnittansicht eines Spritzgussanlage.

Fig. 1 zeigt eine schematische Schnittansicht eines Spritzgusswerkzeugs einer Spritzgussanlage 11, wobei die u.a. dargestellten Wandstärken gegenüber dem tatsächlichen Spritzgusswerkzeug stark abweichen können.

Das Spritzgusswerkzeug umfasst zumindest zwei Werkzeugbauteile 1 und 2, wobei zumindest ein erstes Werkzeugbauteil 1 gegenüber dem zweiten Werkzeugbauteil 2 oder beide Werkzeugbauteile 1 und 2 gegeneinander linear beweglich angeordnet sind. Typischerweise kann es sich bei den Werkzeugbauteilen um eine sogenannte Düsenseite und eine Auswerferseite handeln. In Fig. 1 nicht dargestellt sind Einspritzdüsen zum Einspritzen von geschmolzenem Material in den Hohlraum 5 zwischen den beiden Werkzeugbauteilen oder eine Auswerfervorrichtung zum Abheben des Spritzgussteils von der Oberfläche des Werkzeugbauteils in geöffnetem Zustand. Die Düsenseite kann sowohl die erste als auch das zweite Werkzeugbauteil sein. Gleiches gilt für die Auswerferseite.

Zwischen beiden Werkzeugbauteilen 1 und 2 ist der Hohlraum 5 zur Ausformung eines Spritzgussteils 6 angeordnet. Das Spritzgussteil 6 weist eines oder mehrere Einlegeteile 7 auf, welche bereichsweise freiliegend und bereichsweise im Material des Spritzgussteils angeordnet sind. Die Verbindung zwischen dem Material des Spritzgussteils ist mediumsdicht.

Die Mediumsdichtigkeit wurde in einem Versuch nachgewiesen, wobei das erfindungsgemäß-hergestellte Spritzgussteil mit dem integrierten Einlegeteil einseitig abgedichtet wurde und mit Luft beaufschlagt und in Wasser eingelegt wurde. Der Luftdruck war 6 bar, Temperatur war 25°C. Es konnten keine Luftblasen am Übergang zwischen dem Einlegeteil und der Spritzgussmasse nachgewiesen werden. Dies war bei konventionell-umspritzten Einlegeteilen stets der Fall.

Um dies zu erreichen, wird das Einlegeteil 7 zunächst vorbehandelt. Dies erfolgt durch eine Oberflächenbehandlung des Einlegeteils 7 vor dessen Einsatz im Spritzgusswerkzeug.

In einer ersten Behandlungsstufe A erfolgt eine Reinigung und Oberflächenaktivierung des Einlegeteils 7. Die Reinigung kann durch Erhitzen und insbesondere als eine Plasmareinigung erfolgen, in welcher eine fett- und oxidfreie Oberfläche bereitgestellt wird.

In einer zweiten Behandlungsstufe B erfolgt eine Beschichtung des Einlegeteils 7 zumindest im Bereich in welchem das Spritzgussmaterial das Einlegeteil 7 umgibt. Auch in diesem Bereich muss die Beschichtung nicht zwingend über die gesamte Oberfläche erfolgen, sondern lediglich im Übergangsbereich an welchem das Einlegeteil 7 ins Freie tritt.

Das Einlegeteil 7 wird sodann in eine korrespondierende Öffnung 12 in einer Trennwand 3 welcher an einem Werkzeugbauteil 2 festgelegt ist. Die Öffnung 12 weist gegenüber dem Einlegeteil 7 nur einen sehr geringen Abstand auf, so dass kein Spritzgussmaterial in den Zwischenraum zwischen der Öffnung 12 und dem Einlegeteil 7 eindringen kann.

Hinter der Platte bzw. Trennwand 3 ist in dem Werkzeugbauteil 2 ein Hohlraum 4 eingearbeitet. Innerhalb dieses Hohlraums ist ein Induktor 9 angeordnet. Der Induktor 9 kann eine Spule beliebiger Form sein. Bekannt sind Zylinderspulen ggf. mit einem zylindrischen Spulenkörper. Auch möglich sind flächig gewickelte Spulen mit Zwischenräumen zwischen den gewickelten Lagen. Diese sind auch als pan-cake Spulen bekannt. Bevorzugt ist der Kupferquerschnitt der Spule rechteckig und hohl für die Durchleitung eines Temperiermediums, insbesondere eines Kühlmediums, ausgebildet. Auch sind Induktoren aus sog. HF-Litze einsetzbar

Das Einlegeteil 7 erstreckt sich durch die Öffnung 12 der Trennwand 3 in den Hohlraum 4, in welchem der Induktor 9 derart angeordnet ist, dass sich das Einlegeteil in das elektromagnetische Feld des Induktors 9 erstreckt. Im Fall einer zylindrischen Spule ist dies das Außen- und/oder Innenfeld der Spule und bei einer flächig gewickelten Spule kann es sich um den besagten Zwischenraum handeln.

Der besondere Vorteil der vorliegenden Erfindung ist die unmittelbare Erwärmung des Einlegeteils 7 durch den Induktor 9 ohne zusätzliche energieaufwendige Erwärmung des gesamten Werkzeugbauteils.

Nach dem induktiven Erwärmen des Einlegeteils vorzugsweise auf eine Temperatur oberhalb der Erstarrungstemperatur der Spritzgussmasse 13 in einem Schritt C kann sodann das Befüllen des Hohlraums 5 mit Spritzgussmasse erfolgen, wobei diese das beschichtete Einlegeteil umgibt.

Durch das gemeinsame Erkalten der Spritzgussmasse 13 und des Einlegeteils 7 in Schritt D wird die vorgenannte mediumsdichte Anbindung zwischen beiden Materialien erreicht.

Die Platte 3 kann vorzugsweise austauschbar am Werkzeugbauteil 2 angeordnet sein, um gegen eine Platte mit anders-dimensionierten Öffnungen ausgetauscht zu werden. Dadurch wird eine hohe Variabilität an Spritzgussteilen mit integrierten Einlegeteilen erreicht.

Das Einlegeteil 7 sollte ein induktiv-erwärmbares Material aufweisen. Typischerweise ist das Einlegeteil metallisch, es gibt allerdings auch Verbundwerkstoffe z.B. mit Kunststoff mit einem Metallanteil oder Kohlefasern, welche ebenfalls induktiv erwärmbar sind.

Der vorliegende Anwendungsfall der Fig. 1 beschreibt die Herstellung eines Steckers als Spitzgussteil. Es sind allerdings auch andere Spritzgussteile realisierbar.

Nach dem Erkalten erfolgt ein Ausstoß des geformten Spritzgussteils. Hierfür kann in an sich bekannter Weise eine Auswerfervorrichtung 15 vorgesehen sein, wie dies beispielsweise in Fig. 1 vereinfacht dargestellt ist.

Innerhalb des Hohlraums 4 sind eines oder mehrere Stützelemente 8 angeordnet, welche einen Druck während des Spritzgießens auf das restliche Werkzeugbauteil 2 weiterleiten, damit sich die Platte 3 nicht mittig durchbiegt. Diese Stützelemente 8 können beliebige Form oder Material aufweisen, allerdings haben sich stabförmige oder plattenförmige Keramikelemente als Stützelemente 8 als besonders vorteilhaft erweisen. Im Zwischenraum zwischen den Stützelementen 8 kann die Auswerfervorrichtung z.B. als linear-verschieblicher Auswerferstab angeordnet sein, welcher durch eine weitere nicht-dargestellte Öffnung in der Platte 3 durchgeführt werden kann. Die Stützelemente 8 können dabei zugleich als Lagerung für eine bewegliche Haltevorrichtung der linear-verschieblichen Auswerferstabes dienen.

Durch die Anordnung des Induktors 9 innerhalb eines Hohlraumes 4 im Bereich nach des formgebenden Hohlraums 6 kann eine unmittelbare Erwärmung des Einlegeteils erfolgen.

Weiterhin kann um den formgebenden Hohlraum 5 herum eine Heiz- und/oder Kühlvorrichtung 14 vorgesehen sein. Anstelle der Vorrichtung 14 können auch Kanäle zum Durchleiten eines Kühl- oder Heißmediums vorgesehen sein.

Die Steuerung des Induktors, der Heizung oder Kühlung des Hohlraumes 5 und/oder der Auswerfereinheit 15, sowie der Öffnung des Werkzeuges kann durch eine Steuer- und/oder Auswerteeinheit 10 erfolgen.

### Bezugszeichen

- 1: Werkzeugbauteil
- 2: Werkzeugbauteil
- 3: Trennwand
- 4: Hohlraum
- 5: Hohlraum (formgebend)
- 6: Spritzling
- 7: Einlegeteil
- 8: Stützelement
- 9: Induktor
- 10: Steuer- und Auswerteeinheit
- 11: Spritzgussanlage
- 12: Öffnung
- 13: Spritzgussmasse
- 14: Heiz- oder Kühlvorrichtung
- 15: Auswerfervorrichtung

## Patentansprüche

1. Verwendung einer Vorrichtung zur Induktiven Erwärmung eines elektrisch-leitenden, vorzugsweise metallischen, Einlegeteils (7) als Bestandteil eines Spritzgießlings (6) während dessen Herstellung im Spritzgussverfahrens in einem Spritzgusswerkzeug einer Spritzgussanlage (11),
wobei das Spritzgusswerkzeug einen ersten Hohlraum (4) aufweist, welcher benachbart ist zu einem formgebenden zweiten Hohlraum (5); wobei in dem ersten Hohlraum (4) ein Induktor (9) der Vorrichtung zur induktiven Erwärmung positioniert ist,
wobei zwischen den Hohlräumen (4, 5) eine Trennwand (3) ausgebildet ist und wobei die Trennwand (3) eine oder mehrere Öffnungen (12) zur bereichsweisen Positionierung zumindest eines Einlegeteils (7) im ersten und im zweiten Hohlraum (4, 5) aufweist, derart dass sich das Einlegeteil (7) in das elektromagnetische Feld des Induktors (9) erstreckt,
**dadurch gekennzeichnet, dass** in dem ersten Hohlraum (4) zumindest ein Stützelement (8) in Form eines Vorsprungs angeordnet ist, welcher sich parallel zur Öffnungsrichtung über die gesamte Länge des ersten Hohlraumes (4) bis zur Trennwand (3) erstreckt und über welchen eine Gegenkraft zum Einspritzdruck beim Spritzgießen auf die Trennwand (3) übertragbar ist, derart, dass Kraftübertragung an der Vorrichtung zur Induktiven Erwärmung vorbeigeleitet wird

2. Verwendung nach Anspruch 1, **dadurch gekennzeichnet, dass** die induktive Erwärmung derart erfolgt, dass die Temperatur des Einlegeteils (7) größer ist als die Temperatur eines formgebenden Bauteils (1 oder 2) der Spritzguss-Anlage (11) welcher die Trennwand (3) zugeordnet ist.

3. Verwendung nach Anspruch 1 oder 2, **dadurch gekennzeichnet, dass** das Erwärmen des Einlegeteils (7) bei geschlossenem Spritzgusswerkzeug, vorzugsweise während des Ausformens des Spritzgießlings (6) im formgebenden zweiten Hohlraum (5) erfolgt.

4. Verwendung nach einem der vorhergehenden Ansprüche, **dadurch gekennzeichnet, dass** das Werkzeug zumindest zwei formgebende Bauteile (1, 2) umfasst, welche den formgebenden zweiten Hohlraum (5) bilden, wobei zumindest ein erstes Bauteil (1) gegenüber dem zweiten Bauteil (2) linear in einer Öffnungsrichtung (R) verschiebbar ist, wobei ein erstes der Bauteile eine Einspritzdüse zum Einspritzen von flüssigen Kunststoff in den formgebenden Hohlraum (5) aufweist und ein zweites der Bauteile eine Ausstoßvorrichtung, insbesondere eine Auswerfereinrichtung (!5), aufweist, zum Herauslösen und Ausstoß des Spritzgießlings (6) bei geöffnetem Spritzgusswerkzeug.

5. Verwendung nach einem der vorhergehenden Ansprüche, **dadurch gekennzeichnet, dass** die Trennwand (3) Teil des zweiten der Bauteile (2) ist.

6. Verwendung nach einem der vorhergehenden Ansprüche, **dadurch gekennzeichnet, dass** die Trennwand (3) lösbar vom übrigen Bauteil angeordnet ist.

7. Verwendung nach einem der vorhergehenden Ansprüche, **dadurch gekennzeichnet, dass** der Induktor (9) als zylindrische Spule ausgebildet ist, wobei das Einlegeteil (7) in das Innenfeld oder das Außenfeld der Spule ragt.

8. Verwendung nach Anspruch 1, **dadurch gekennzeichnet, dass** das Stützelement (8) als ein Keramikblock ausgebildet ist oder dass zumindest zwei Stützelemente (8) vorgesehen sind die jeweils als Keramikstab mit Ausrichtung in Öffnungsrichtung ausgebildet sind, wobei der Keramikblock oder Keramikstab vorzugsweise ausgebildet sind zur Führung der linear verschieblichen Auswerfereinrichtung (15).

9. Verwendung nach einem der vorhergehenden Ansprüche, **dadurch gekennzeichnet, dass** die Vorrichtung zur Induktiven Erwärmung ein Bauteil zur Kraftübertragung einer Gegenkraft zum Einspritzdruck beim Spritzgießen aufweist, wobei das Bauteil vorzugsweise als Spulenkörper ausgebildet ist.

10. Verwendung nach einem der vorhergehenden Ansprüche, **dadurch gekennzeichnet, dass** die Temperatur des erwärmten Einlegeteils (7) um weniger als 20 K von der Temperatur der im Ausformen eingespritzten Masse unterscheidet.

11. Verwendung nach einem der vorhergehenden Ansprüche, **dadurch gekennzeichnet, dass** die Temperaturdifferenz zwischen dem Einlegeteil (7) und dem formgebenden Bauteil (1) zur Ausformung des Spritzgießlings (6) zumindest 80 K, vorzugsweise zwischen 100-300 K liegt.

12. Verwendung nach einem der vorhergehenden Ansprüche, **dadurch gekennzeichnet, dass** das Einlegeteil (6) durch eine vorbereitende Plasmabehandlung fettfrei und oxidschichtfrei ist.

13. Verwendung nach einem der vorhergehenden Ansprüche, **dadurch gekennzeichnet, dass** das Einlegeteil (6) vor der Induktiven Erwärmung eine Polymerbeschichtung, vorzugsweise aufgebracht mittels einer Plasmabehandlung, zur mediumsdichten Anbindung des Einlegeteils (7) an die Kunststoffmasse eines Spritzgießlings (6) aufweist.

14. Verwendung nach einem der vorhergehenden Ansprüche, **dadurch gekennzeichnet, dass** die Trennwand (3) und zumindest der Induktor (9), und vorzugsweise auch das oder die Stützelemente (8) und/oder die Ausstoßvorrichtung (15), als eine gegenüber dem restlichen Bauteil (2) lösbare Einheit ausgebildet sind.

## Claims

1. Use of a device for inductive heating of an electrically conductive, preferably metallic, insertion part (7) as a component of an injection-molded part (6) during its production in an injection-molding process in an injection-molding tool of an injection-molding system (11), wherein the injection-molding tool has a first cavity (4) which is adjacent to a shaping second cavity (5); wherein an inductor (9) of the device for inductive heating is positioned in the first cavity (4),
wherein a partition wall (3) is formed between the cavities (4, 5), and wherein the partition wall (3) has one or more openings (12) for regionally positioning at least one insertion part (7) in the first and second cavities (4, 5), such that the insertion part (7) extends into the electromagnetic field of the inductor (9),
**characterized in that** at least one support element (8) in the form of a projection is arranged in the first cavity (4), which projection extends parallel to the opening direction over the entire length of the first cavity (4) as far as the partition wall (3) and via which a counterforce to the injection pressure during injection molding can be transmitted to the partition wall (3) in such a way that force transmission is diverted past the device for induction heating.

2. Use according to claim 1, **characterized in that** the inductive heating takes place in such a way that the temperature of the insertion part (7) is greater than the temperature of a shaping component (1 or 2) of the injection-molding system (11) with which the partition wall (3) is associated.

3. Use according to claim 1 or 2, **characterized in that** the heating of the insertion part (7) takes place with the injection-molding tool closed, preferably during the molding of the injection-molded part (6) in the shaping second cavity (5).

4. Use according to one of the preceding claims, **characterized in that** the tool comprises at least two shaping components (1, 2) which form the shaping second cavity (5), wherein at least a first component (1) is linearly displaceable relative to the second component (2) in an opening direction (R), wherein a first of the components has an injection nozzle for injecting liquid plastic into the shaping cavity (5), and a second of the components has a discharge device, in particular an ejector device (15), for releasing and ejecting the injection-molded part (6) when the injection-molding tool is open.

5. Use according to one of the preceding claims, **characterized in that** the partition wall (3) is part of the second of the components (2).

6. Use according to one of the preceding claims, **characterized in that** the partition wall (3) is detachably arranged from the remaining component.

7. Use according to one of the preceding claims, **characterized in that** the inductor (9) is formed as a cylindrical coil, wherein the insertion part (7) projects into the inner field or the outer field of the coil.

8. Use according to claim 1, **characterized in that** the support element (8) is formed as a ceramic block or **in that** at least two support elements (8) are provided, each of which is formed as a ceramic rod with alignment in the opening direction, wherein the ceramic block or ceramic rod is preferably formed for guiding the linearly displaceable ejector device (15).

9. Use according to one of the preceding claims, **characterized in that** the device for inductive heating has a component for transmitting a counterforce to the injection pressure during injection molding, wherein the component is preferably designed as a coil body.

10. Use according to one of the preceding claims, **characterized in that** the temperature of the heated insertion part (7) differs by less than 20 K from the temperature of the compound injected into the molding.

11. Use according to one of the preceding claims, **characterized in that** the temperature difference between the insertion part (7) and the shaping component (1) for molding the injection-molded part (6) is at least 80 K, preferably between 100-300 K.

12. Use according to one of the preceding claims, **characterized in that** the insertion part (6) is free of grease and oxide layer by a preparatory plasma treatment.

13. Use according to one of the preceding claims, **characterized in that** the insertion part (6) has, prior to inductive heating, a polymer coating, preferably applied by means of a plasma treatment, for medium-tight bonding of the insertion part (7) to the plastic compound of an injection-molded part (6).

14. Use according to one of the preceding claims, **characterized in that** the partition wall (3) and at least the inductor (9), and preferably also the support element(s) (8) and/or the ejector device (15), are designed as a unit which can be detached from the rest of the component (2).

## Revendications

1. Utilisation d'un dispositif de chauffage par induction d'un insert (7) électriquement conducteur, de préférence métallique, faisant partie d'une pièce moulée par injection (6) pendant sa fabrication par le procédé de moulage par injection dans un outil de moulage par injection d'une installation de moulage par injection (11), l'outil de moulage par injection présentant une première cavité (4) qui est voisine d'une deuxième cavité (5) de mise en forme ;
un inducteur (9) du dispositif de chauffage par induction étant positionné dans la première cavité (4),
une paroi de séparation (3) étant formée entre les cavités (4, 5) et la paroi de séparation (3) présentant une ou plusieurs ouvertures (12) pour le positionnement dans certaines zones d'au moins un insert (7) dans la première et dans la deuxième cavité (4, 5), de telle sorte que l'insert (7) s'étende dans le champ électromagnétique de l'inducteur (9),
**caractérisée en ce que** dans la première cavité (4) est disposé au moins un élément d'appui (8) sous la forme d'une saillie, qui s'étend parallèlement à la direction d'ouverture sur toute la longueur de la première cavité (4) jusqu'à la paroi de séparation (3) et par lequel une force antagoniste à la pression d'injection peut être transmise à la paroi de séparation (3) lors du moulage par injection, de telle sorte que la transmission de force soit déviée du dispositif de chauffage par induction.

2. Utilisation selon la revendication 1, **caractérisée en ce que** le chauffage par induction est effectué de telle sorte que la température de l'insert (7) soit supérieure à la température d'un élément de mise en forme (1 ou 2) de l'installation de moulage par injection (11) à laquelle la paroi de séparation (3) est associée.

3. Utilisation selon la revendication 1 ou 2, **caractérisée en ce que** le chauffage de l'insert (7) est effectué lorsque l'outil de moulage par injection est fermé, de préférence pendant le moulage de la pièce moulée par injection (6) dans la deuxième cavité de mise en forme (5).

4. Utilisation selon l'une des revendications précédentes, **caractérisée en ce que** l'outil de moulage comprend au moins deux éléments de mise en forme (1, 2) qui forment la deuxième cavité de mise en forme (5), au moins un premier élément (1) étant déplaçable linéairement dans une direction d'ouverture (R) par rapport au deuxième élément (2), un premier des éléments présentant une buse d'injection pour injecter de la matière plastique liquide dans la cavité de mise en forme (5) et un deuxième des éléments présentant un dispositif d'éjection, en particulier un moyen d'éjection (15), pour extraire et éjecter la pièce moulée par injection (6) lorsque l'outil de moulage par injection est ouvert.

5. Utilisation selon l'une des revendications précédentes, **caractérisée en ce que** la paroi de séparation (3) fait partie du deuxième des éléments (2).

6. Utilisation selon l'une des revendications précédentes, **caractérisée en ce que** la paroi de séparation (3) est disposée de manière amovible par rapport au reste de l'élément.

7. Utilisation selon l'une des revendications précédentes, **caractérisée en ce que** l'inducteur (9) est réalisé sous la forme d'une bobine cylindrique, l'insert (7) faisant saillie dans le champ intérieur ou le champ extérieur de la bobine.

8. Utilisation selon la revendication 1, **caractérisée en ce que** l'élément d'appui (8) est réalisé sous la forme d'un bloc en céramique ou **en ce qu'**il est prévu au moins deux éléments d'appui (8) qui sont réalisés chacun sous la forme d'une tige en céramique avec une orientation dans la direction d'ouverture, le bloc en céramique ou la tige en céramique étant de préférence réalisé(e) de manière à guider le dispositif d'éjection (15) déplaçable linéairement.

9. Utilisation selon l'une des revendications précédentes, **caractérisée en ce que** le dispositif de chauffage par induction présente un élément de transmission d'une force antagoniste à la pression d'injection lors du moulage par injection, ledit élément étant de préférence réalisé sous la forme d'un corps de bobine.

10. Utilisation selon l'une des revendications précédentes, **caractérisée en ce que** la température de l'insert (7) chauffé diffère de moins de 20 K de la température de la masse injectée lors du moulage.

11. Utilisation selon l'une des revendications précédentes, **caractérisée en ce que** la différence de température entre l'insert (7) et l'élément de mise en forme (1) pour le moulage de la pièce moulée par injection (6) est d'au moins 80 K, de préférence comprise entre 100 et 300 K.

12. Utilisation selon l'une des revendications précédentes, **caractérisée en ce que** l'insert (6) est dégraissé et exempt de couche d'oxyde par un traitement préalable au plasma.

13. Utilisation selon l'une des revendications précédentes, **caractérisée en ce que** l'insert (6) présente, avant le chauffage par induction, un revêtement polymère, de préférence appliqué au moyen d'un traitement au plasma, pour la liaison étanche au milieu de l'insert (7) à la masse de matière plastique d'une pièce moulée par injection (6).

14. Utilisation selon l'une des revendications précédentes, **caractérisée en ce que** la paroi de séparation (3) et au moins l'inducteur (9), et de préférence également le ou les éléments d'appui (8) et/ou le dispositif d'éjection (15), sont réalisés sous la forme d'une unité amovible par rapport au reste de l'élément (2).
